# EUROPEAN PATENT SPECIFICATION

(11) **EP 4 524 034 B1**
(45) Date of publication and mention of the grant of the patent: **02.12.2026**
(21) Application number: 22941750.6
(22) Date of filing: 09.08.2022
(51) Int. Cl.: B64D 17/80, B64D 27/34, B64D 27/357, B64D 31/16, B64U 10/13, B64U 10/14, B64U 50/19, B64U 50/30, B64U 70/83

(54) **FLYING BODY AND CONTROL METHOD FOR FLYING BODY**
FLUGKÖRPER UND STEUERUNGSVERFAHREN FÜR FLUGKÖRPER
CORPS VOLANT ET PROCÉDÉ DE CONTRÔLE POUR UN CORPS VOLANT

(30) Priority: 11.05.2022 JP 2022078223
(43) Date of publication of application: 19.03.2025
(73) Proprietor: Nippon Kayaku Kabushiki Kaisha, Tokyo 100-0005 (JP)
(72) Inventor: YOSHIOKA, Takuto, Himeji-shi, Hyogo 679-2123 (JP); HATANAKA, Tomohiro, Himeji-shi, Hyogo 679-2123 (JP)
(74) Representative: TBK
(86) International application number: PCT/JP2022/030403
(87) International publication number: WO 2023/218674

(56) References cited:
- WO-A1-2018/012768
- WO-A1-2018/190319
- CN-A- 110 641 712
- JP-A- 2020 093 724
- JP-A- 2020 196 440
- US-A1- 2018 225 977
- US-A1- 2021 061 464

## Description

### TECHNICAL FIELD

The present disclosure relates to an aerial vehicle and a method of controlling an aerial vehicle.

### BACKGROUND ART

Various manned aircrafts and various unmanned aircrafts have conventionally been known as aerial vehicles.

For example, US Patent Publication No. 2017/0106986A1 (PTL 1) discloses an unmanned aircraft provided with a parachute. When the unmanned aircraft in PTL 1 senses a crash or the like, it expands the parachute and stops power feed to a motor that rotates a propeller. Specifically, in the unmanned aircraft in PTL 1, a power supply and the motor that rotates the propeller are directly connected to each other through a wire. When the unmanned aircraft in PTL 1 senses the crash or the like, it physically disconnects the power supply and the motor from each other. Power feed to the motor is thus stopped.

WO2019/216204A1 (PTL 2) discloses a current breaker included in an unmanned aircraft provided with a parachute. The current breaker cuts off supply of the current to an electric device of the unmanned aircraft. Occurrence of failure in expansion of the parachute at the time of (during) a crash of the unmanned aircraft is thus prevented. Furthermore, occurrence of accidental contact between an operating propeller and a human after the crash is prevented.

WO2017/030034A1 (PTL 3) discloses an unmanned aircraft in which a battery is chargeable by a power generator during flight for achieving a longer flight distance. When the unmanned aircraft senses a crash thereof, it stops charging from the power generator to the battery. Damage caused by an accident following the crash of the unmanned aircraft is thus prevented from spreading.

Furthermore, US 2018/225977 A1 discloses a flight control apparatus that is mounted in a body of an unmanned aerial vehicle, the flight control apparatus comprising a main control device and a sub-control device which are separate entities, wherein the main control device includes a central processing unit and a pulse width modulator, the central processing unit and the pulse width modulator are connected via the sub-control device, and the sub-control device transfers a control signal from the central processing unit to the pulse width modulator to pass therethrough when the body is in a normal flight state, and shuts off a control signal from the central processing unit and sends a control signal directly to the pulse width modulator when interrupting a body control processing by the main control device. Still further, US 2021/061464 A1 refers to a flying apparatus including a body unit, a lift-force generating part that is connected to the body unit and generates a lift force, a flight control part that controls the lift-force generating unit, an abnormality detecting part that detects an abnormality during flight, a parachute device including a parachute, a small flying object coupled to the parachute, and a parachute accommodating part that accommodates the parachute and the small flying object, and a fall control part that ejects the small flying object from the parachute accommodating part according to the detection of the abnormality by the abnormality detecting part.

### SUMMARY OF INVENTION

### TECHNICAL PROBLEM

The unmanned aircraft in PTL 1 includes an electronic speed controller (ESC) that drives the motor described above. The electronic speed controller is specifically a motor driver (amplifier) that controls the number of rotations of the motor by feed of a current to the motor. The electronic speed controller controls a flying speed of the unmanned aircraft. Therefore, even when the power supply and the motor are disconnected from each other as above, the current flows from the power supply to the motor through the electronic speed controller. Therefore, the unmanned aircraft in PTL 1 is actually unable to stop rotation of the propeller by disconnection as above.

The unmanned aircraft including the current breaker in PTL 2 causes the current breaker to cut off supply of the current to the electric device thereof at the time of crash. Therefore, at the time of crash of the unmanned aircraft (descent with the use of the parachute), the unmanned aircraft is unable to calculate the current position and to communicate with an external device on the ground. Therefore, the external device on the ground is unable to specify the current position of the unmanned aircraft.

Even when the unmanned aircraft in PTL 3 senses the crash thereof, power is kept supplied from the battery to the motor that rotates the propeller. In other words, a propulsive mechanism (the propeller and the motor) of the unmanned aircraft keeps operating.

The present disclosure was made in view of the problems above, and an object thereof is to provide an aerial vehicle capable of deactivating all propulsive mechanisms by disconnection of a single power path and capable of transmitting information on a current position to an external device also after disconnection of the power path, and a method of controlling an aerial vehicle.

### SOLUTION TO PROBLEM

According to the invention, the object is achieved by an aerial vehicle according to claim 1 and a method of controlling an aerial vehicle according to claim 7. Further features and advantageous modifications are shown in the dependent claims.

According to one aspect of the present disclosure, an aerial vehicle includes a battery, a plurality of propulsive mechanisms, a communication apparatus for wireless communication with an external device, a receiver that obtains a current position of the aerial vehicle by receiving radio waves emitted from a plurality of positioning satellites, a flight controller that controls flight of the aerial vehicle and can transmit information on the current position through the communication apparatus, a plurality of drive apparatuses each communicatively connected to the flight controller, the plurality of drive apparatuses driving respective different ones of the plurality of propulsive mechanisms, a distributor that distributes supplied electric power to each of the plurality of drive apparatuses, a power supply module that supplies electric power from the battery to the communication apparatus, the receiver, and the flight controller through a first power path and supplies electric power to the distributor through a second power path, and a disconnection apparatus that cuts off supply of electric power from the power supply module to the distributor through the second power path when predetermined abnormality occurs in the aerial vehicle. The disconnection apparatus includes a transistor provided between the power supply module and the distributor, the transistor allowing a flow of the current from the power supply module to the distributor through the second power path while the transistor is on, and when the predetermined abnormality occurs, the disconnection apparatus turns off the transistor.

According to another aspect of the present disclosure, an aerial vehicle supplies electric power from a contained battery through a first power path, to a flight controller that controls flight of the aerial vehicle, a communication apparatus for wireless communication with an external device, and a receiver that calculates a current position of the aerial vehicle, and supplies electric power through a second power path, to a distributor that distributes electric power to each of a plurality of drive apparatuses. The drive apparatuses drive respective different ones of a plurality of propulsive mechanisms based on a command from the flight controller. A method of controlling the aerial vehicle includes cutting off supply of electric power to the distributor through the second power path when predetermined abnormality occurs in the aerial vehicle and transmitting to the external device, information on the current position through the communication apparatus when the predetermined abnormality occurs. A transistor is provided in the second power path, the transistor allowing a flow of the current to the distributor while the transistor is on, and when the predetermined abnormality occurs, turning off the transistor.

### ADVANTAGEOUS EFFECTS OF INVENTION

According to the present disclosure, when predetermined abnormality occurs in the aerial vehicle, all propulsive mechanisms can be deactivated by disconnection of a single power path, and information on the current position can be transmitted to an external device also after the power path is disconnected.

### BRIEF DESCRIPTION OF DRAWINGS

Fig. 1 is a diagram showing a state that a drone is flying.
Fig. 2 is a diagram showing a state of descent of the drone with a parachute having been ejected.
Fig. 3 is a block diagram for illustrating a hardware configuration of the drone.
Fig. 4 is a diagram for illustrating a specific example of a disconnection apparatus.
Fig. 5 is a flowchart for illustrating a flow of processing performed in the drone.
Fig. 6 is a diagram showing a state before disconnection of a power path in a first modification of the disconnection apparatus.
Fig. 7 is a diagram showing a state after disconnection of the power path in the first modification of the disconnection apparatus.
Fig. 8 is a diagram for illustrating a second modification of the disconnection apparatus.
Fig. 9 is a block diagram for illustrating a hardware configuration of another drone.

### DESCRIPTION OF EMBODIMENTS

An embodiment according to the present invention will be described below with reference to the drawings. In the description below, the same components and constituent elements have the same reference characters allotted and their labels and functions are also the same. Therefore, detailed description thereof will not be repeated.

An unmanned aircraft will be described below by way of example of an aerial vehicle. Specifically, a drone as the unmanned aircraft will be described by way of example. More specifically, a drone with rotary wings will be described by way of example. The present disclosure is also applicable to various manned aircrafts (other examples of the aerial vehicle) such as a "flying car."

### <A. Overview of Drone>

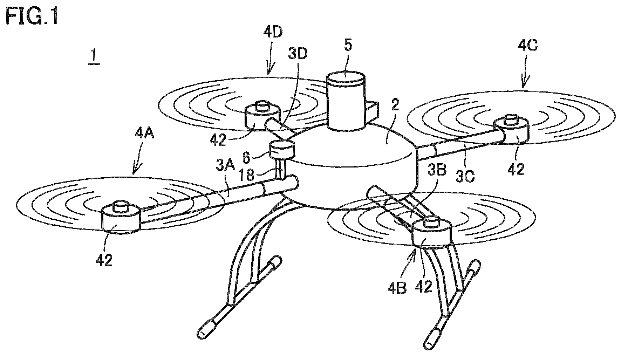

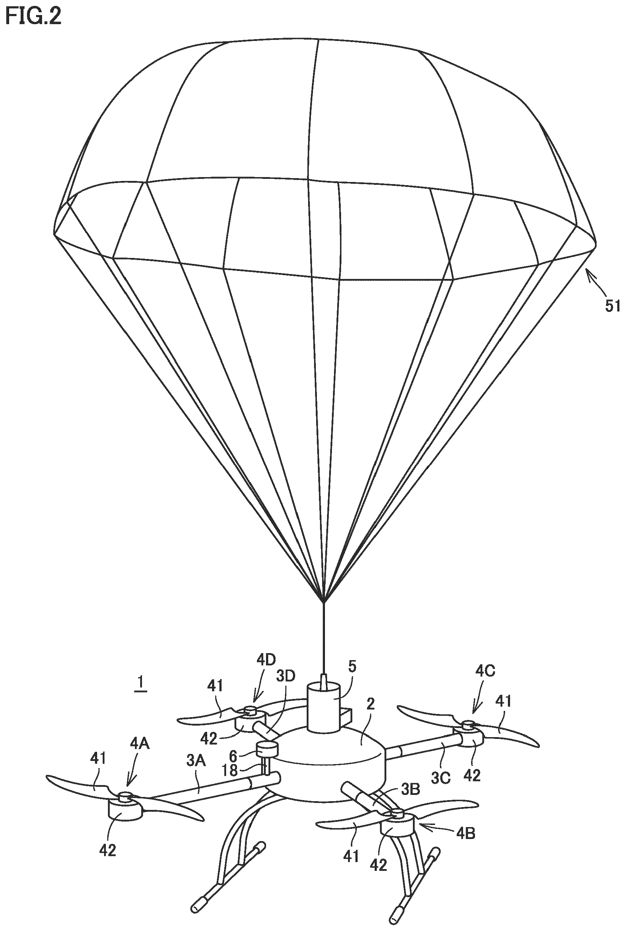

A drone according to the present embodiment is adapted to automatic control and manual control by a remote controller operation by an operator. Fig. 1 is a diagram showing a state that a drone is flying. Fig. 2 is a diagram showing a state of descent of the drone with a parachute having been ejected.

As shown in Figs. 1 and 2, a drone 1 includes a main body 2, four arms 3A, 3B, 3C, and 3D, four propulsive mechanisms 4A, 4B, 4C, and 4D, an ejection apparatus 5, a communication unit 6, and a support member 18. Each of propulsive mechanisms 4A, 4B, 4C, and 4D includes a propeller 41 (see Fig. 2) and a motor 42.

For the sake of convenience of description, any one arm of arms 3A, 3B, 3C, and 3D will also be referred to as an "arm 3" below. Similarly, any one propulsive mechanism of propulsive mechanisms 4A, 4B, 4C, and 4D will also be referred to as a "propulsive mechanism 4."

Arm 3 is attached to main body 2. Arm 3 has a base end and a tip end. Arm 3 has the base end attached to main body 2. In the present example, arm 3 extends from a side surface of main body 2.

Propulsive mechanism 4 is attached to the tip end of arm 3. Motor 42 is attached to the tip end of arm 3. Propeller 41 is attached to a rotation shaft (not shown) of motor 42.

Ejection apparatus 5 is attached to an upper surface (a top surface) of main body 2. A parachute 51 is accommodated in ejection apparatus 5. Ejection apparatus 5 ejects parachute 51 (see Fig. 2) when predetermined abnormality occurs in drone 1. Ejection apparatus 5 senses drop of drone 1 and instantaneously expands the parachute by activating a gas generator contained in ejection apparatus 5. An explosive gas generator (pyrotechnic) or a non-explosive gas generator such as a canister type gas generator may be employed as the gas generator.

Support member 18 extends upward from a portion of connection between arm 3 and main body 2 in the present example. Support member 18 is a hollow pipe. In the inside of support member 18, a wire for communication unit 6 passes. In the present example, communication unit 6 is supported by support member 18 as being located above main body 2.

Though drone 1 including four arms 3 and four propulsive mechanisms 4 is exemplified, the number of arms and the number of propulsive mechanisms are not limited as such.

### <B. Hardware Configuration and Performed Processing>

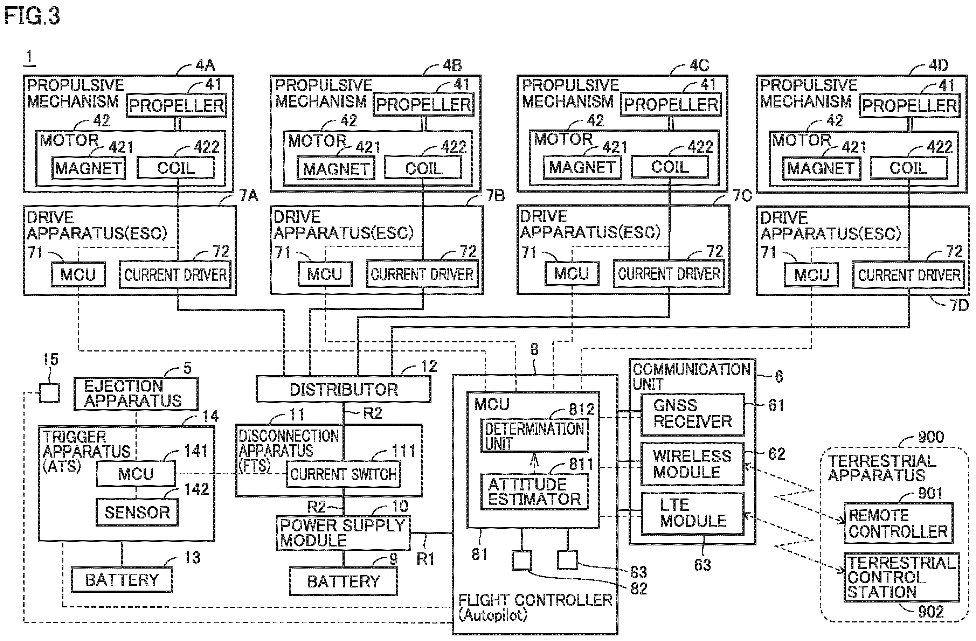

Fig. 3 is a block diagram for illustrating a hardware configuration of drone 1. As shown in Fig. 3, drone 1 can communicate with a terrestrial apparatus 900. Terrestrial apparatus 900 includes a remote controller 901 and a terrestrial control station 902. In Fig. 3, a main power path is shown with a solid line and a main signal path is shown with a dashed line.

In addition to propulsive mechanisms 4A, 4B, 4C, and 4D, ejection apparatus 5, and communication unit 6 described above, drone 1 includes drive apparatuses (electronic speed controllers (ESCs)) 7A, 7B, 7C, and 7D, a flight controller (an autopilot) 8, a battery 9, a power supply module 10, a disconnection apparatus (flight termination system (FTS)) 11, a distributor 12, a battery 13, a trigger apparatus (auto trigger system (ATS)) 14, and a sensor 15. For the sake of convenience of description, any one drive apparatus of drive apparatuses 7A, 7B, 7C, and 7D will also be referred to as a "drive apparatus 7" below.

As described above, propulsive mechanism 4 includes propeller 41 and motor 42. Motor 42 includes a magnet 421 and a coil 422. A type of motor 42 is not particularly limited. For example, a brushless direct-current (DC) motor, a brushed DC motor, or an alternating-current (AC) motor can be employed as motor 42. Drive apparatus 7 includes a micro controller unit (MCU) 71 and a current driver 72.

Flight controller 8 includes an MCU 81, an inertial measurement unit (IMU) 82, and a pressure altimeter 83. MCU 81 includes an attitude estimator 811 and a determination unit 812 as functional blocks. MCU 81 is communicatively connected to inertial measurement unit 82 and pressure altimeter 83.

Disconnection apparatus 11 includes a current switch 111. Trigger apparatus 14 includes an MCU 141 and a sensor 142. Sensor 142 detects an acceleration, an angular velocity, an attitude angle, and variation in altitude of drone 1.

MCUs 71, 81, and 141 each specifically include a central processing unit (CPU), a memory such as a read only memory (ROM) and a random access memory (RAM), and an input/output (I/O) circuit which are not shown. A program and data are stored in the memory. For example, data indicating a flight route of drone 1 is stored in the memory of MCU 81.

Communication unit 6 includes a global navigation satellite system (GNSS) receiver 61, a wireless module 62, and a long term evolution (LTE) module 63.

Battery 9 is a storage battery (secondary battery). Battery 9 is connected to power supply module 10.

Power supply module 10 supplies electric power from battery 9 to flight controller 8 and communication unit 6 through a power path R1. In the present example, power is fed to communication unit 6 through flight controller 8. Power supply module 10 supplies electric power from battery 9 to distributor 12 through a power path R2. Specifically, power supply module 10 supplies electric power from battery 9 to distributor 12 through disconnection apparatus 11. Power supply module 10 thus branches the power path from battery 9 into two power paths R1 and R2.

In power path R2, a connector terminal of power supply module 10 and a connector terminal of distributor 12 are connected to each other through a wire. The connector terminal of power supply module 10 and the connector terminal of distributor 12 are preferably plated with gold in order to reduce heat generation due to contact resistance of the wire.

Distributor 12 distributes supplied electric power to each of four drive apparatuses 7. Distributor 12 allows electric power supplied through power path R2 to be supplied to each of four drive apparatuses 7. Specifically, distributor 12 allows electric power to be supplied to current driver 72 of each of four drive apparatuses 7. Though not shown with the solid line, electric power is supplied also to each MCU 71. Current driver 72 and coil 422 of motor 42 are connected to each other through a wire.

Drive apparatus 7 is communicatively connected to flight controller 8. Drive apparatus 7 drives corresponding propulsive mechanism 4 based on a command from flight controller 8. Specifically, drive apparatus 7 adjusts propulsive force of corresponding propulsive mechanism 4 based on a command from flight controller 8. Specifically, drive apparatus 7A adjusts propulsive force of corresponding propulsive mechanism 4A. Similarly, drive apparatuses 7B, 7C, and 7D adjust propulsive force of respective propulsive mechanisms 4B, 4C, and 4D. Drive apparatus 7 thus functions as a control device that controls propulsive mechanism 4.

Specifically, MCU 71 receives a command from MCU 81 of flight controller 8. MCU 71 controls a current fed by current driver 72 to coil 422 of motor 42 based on the command. By such control of the current to be fed to coil 422, a rotation speed of motor 42 is controlled. A speed of rotation of propeller 41 can thus be controlled.

GNSS receiver 61, wireless module 62, and LTE module 63 are communicatively connected to MCU 81 of flight controller 8. GNSS receiver 61, wireless module 62, and LTE module 63 receive supply of electric power from flight controller 8. GNSS receiver 61, wireless module 62, and LTE module 63 operate with electric power from battery 9.

GNSS receiver 61 receives radio waves emitted from a plurality of positioning satellites (not shown) and obtains the current position of drone 1 based on received radio waves. GNSS receiver 61 periodically sends information indicating the current position to flight controller 8. Specifically, GNSS receiver 61 periodically sends information on a latitude and a longitude of drone 1 as position information to MCU 81.

Wireless module 62 is a communication module for communication with remote controller 901. Communication between wireless module 62 and remote controller 901 is used in manual control of drone 1 within a range viewable by the operator. Therefore, this communication is real-time. A command from remote controller 901 is inputted to MCU 81 through wireless module 62.

LTE module 63 is a communication module for communication with terrestrial control station 902 with a base station (not shown) being interposed. Communication between LTE module 63 and terrestrial control station 902 is used in flight of drone 1 over several kilometers by automatic control. In the present example, MCU 81 transmits position information of drone 1 to terrestrial control station 902 through LTE module 63. Timing of transmission of the position information will be described later.

Inertial measurement unit 82 periodically measures the angular velocity and the acceleration of drone 1 in a three-dimensional space. Pressure altimeter 83 periodically measures the altitude from the ground level and the sea level.

Flight controller 8 controls flight of drone 1. Flight controller 8 realizes automatic control and manual control by a remote controller operation by the operator.

In automatic control, flight controller 8 controls flight of drone 1 based on a predetermined flight route. Specifically, MCU 81 of flight controller 8 implements autonomous flight of drone 1 based on the current position obtained by GNSS receiver 61, a result of detection by inertial measurement unit 82, and a result of detection (altitude) by pressure altimeter 83. As described above, flight controller 8 can transmit information on the current position of drone 1 through LTE module 63 which is the communication apparatus.

More specifically, attitude estimator 811 of MCU 81 estimates an attitude of drone 1 based on a result of detection by inertial measurement unit 82. Determination unit 812 of MCU 81 determines whether or not the estimated attitude is an abnormal attitude based on a predetermined reference. When MCU 81 determines the estimated attitude as the abnormal attitude, it transmits a predetermined signal to trigger apparatus 14.

Flight controller 8 transmits the information on the current position of drone 1 to terrestrial control station 902 through LTE module 63, based on occurrence of predetermined abnormality in drone 1.

Without being limited as such, flight controller 8 may transmit the information on the current position of drone 1 to terrestrial control station 902 on condition that the drone has landed with the use of parachute 51. When the current position does not change for a certain time period or longer, drone 1 can be determined as having landed. Alternatively, drone 1 can be determined as having landed based on the result of detection by pressure altimeter 83. Drone 1 can be determined as having landed also based on a result of detection by inertial measurement unit 82.

Ejection apparatus 5 contains the parachute. When the predetermined abnormality occurs in drone 1, ejection apparatus 5 ejects parachute 51. In the present example, ejection apparatus 5 ejects parachute 51 in any of automatic control and manual control.

When the predetermined abnormality occurs, disconnection apparatus 11 cuts off supply of electric power from power supply module 10 to distributor 12 through power path R2. Specifically, disconnection apparatus 11 cuts off supply of electric power to distributor 12 by an operation of current switch 111. In the present example, disconnection apparatus 11 cuts off supply of electric power to distributor 12 in any of automatic control and manual control.

Trigger apparatus 14 is fed with power from battery 13. Trigger apparatus 14 activates disconnection apparatus 11 and ejection apparatus 5 based on occurrence of predetermined abnormality in drone 1. Specifically, MCU 141 sends a prescribed signal (command) to ejection apparatus 5, so that ejection apparatus 5 ejects parachute 51 to the outside. As MCU 141 sends a prescribed signal (which will also be referred to as a "current break command signal" below) to disconnection apparatus 11, current switch 111 of disconnection apparatus 11 is activated. As a result of the activation, supply of electric power from power supply module 10 to distributor 12 through power path R2 is cut off. Drone 1 is thus forced to stop autonomous flight.

The current break command signal above is desirably resistant to variation in voltage caused by electromagnetic noise. For example, the current break command signal is preferably a signal having as a variable, a time period for which the High level of a voltage is held.

Examples of the predetermined abnormality include the estimated attitude being an abnormal attitude and deviation from a scheduled flight route. Based on determination by MCU 81 of flight controller 8 that the attitude of drone 1 is abnormal or determination by MCU 81 as deviation from the flight route, MCU 141 of trigger apparatus 14 activates disconnection apparatus 11 and ejection apparatus 5.

Without being limited as such, trigger apparatus 14 may determine whether or not predetermined abnormality has occurred based on a result of sensing by sensor 142. A type of abnormality is not particularly limited so long as it is set in advance.

In the present example, when a prescribed condition is satisfied after trigger apparatus 14 causes disconnection apparatus 11 to cut off supply of electric power to distributor 12 through power path R2, trigger apparatus 14 causes ejection apparatus 5 to eject parachute 51. Specifically, when a prescribed time period (for example, one second) has elapsed after trigger apparatus 14 caused disconnection apparatus 11 to cut off supply of electric power to distributor 12 through power path R2, trigger apparatus 14 causes ejection apparatus 5 to eject parachute 51.

The prescribed time period is preferably within 1.5 seconds. The prescribed time period is preferably set to a time period longer than a time period in which rotation of propeller 41 stops.

Sensor 15 detects whether or not ejection apparatus 5 has been activated. Sensor 15 is communicatively connected to flight controller 8. When the predetermined abnormality occurs, flight controller 8 transmits through LTE module 63 to terrestrial control station 902, the fact of forced stop of the flight and the result of detection by sensor 15. Flight controller 8 may transmit information indicating the type of abnormality to terrestrial control station 902.

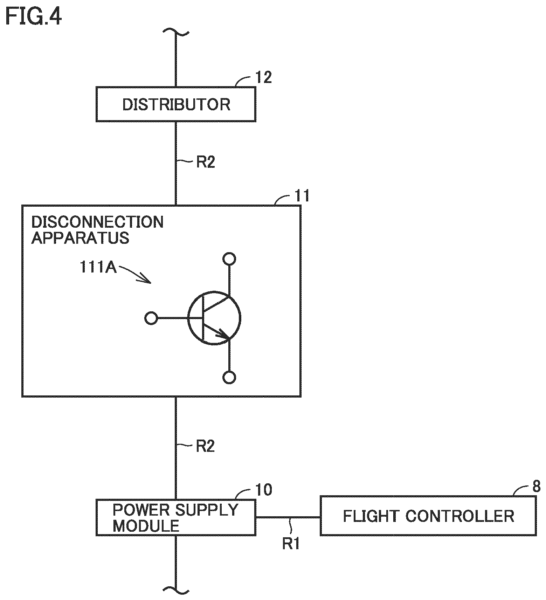

Fig. 4 is a diagram for illustrating a specific example of disconnection apparatus 11. As shown in Fig. 4, disconnection apparatus 11 includes a transistor 111A that functions as current switch 111.

Transistor 111A is provided between power supply module 10 and distributor 12 and allows a flow of a current from power supply module 10 to distributor 12 through power path R2 while it is on. In the present example, transistor 111A is a bipolar transistor. Specifically, transistor 111A is an npn-type transistor.

When the predetermined abnormality described above occurs, disconnection apparatus 11 turns off transistor 111A. As disconnection apparatus 11 switches a state of transistor 111A from on to off, it cuts off supply of electric power from power supply module 10 to distributor 12 through power path R2.

Transistor 111A is not limited to the npn-type bipolar transistor. Transistor 111A may be a pnp-type bipolar transistor. Alternatively, transistor 111A may be a field effect transistor (unipolar transistor). In this case, transistor 111A may be a junction field effect transistor (FET) or a MOS field effect transistor. Furthermore, transistor 111A may be an insulated gate bipolar transistor (IGBT).

Transistor 111A generates heat as a result of energization. In order to prevent a temperature of transistor 111A from exceeding a rated temperature, disconnection apparatus 11 preferably includes a heat sink member that radiates heat of transistor 111A. Disconnection apparatus 11 may include a substrate of an aluminum material for heat radiation or an electric fan for cooling instead of or together with the heat sink member.

When transistor 111A is switched from on to off, a surge voltage is generated. In order to prevent break of transistor 111A by the surge voltage, disconnection apparatus 11 preferably includes a snubber circuit. The snubber circuit includes at least one of a resistor and a capacitor.

### <C. Control Structure>

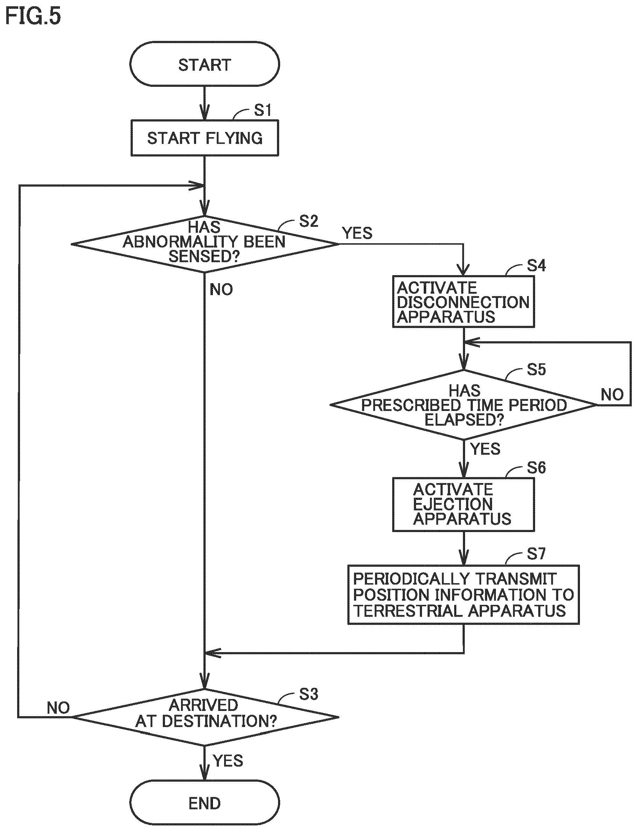

Fig. 5 is a flowchart for illustrating a flow of processing performed in drone 1. As shown in Fig. 5, in step S1, drone 1 starts flying. In step S2, drone 1 determines whether or not the predetermined abnormality described above has occurred therein. When drone 1 determines that abnormality has not occurred (NO in step S2), the process proceeds to step S3. In step S3, drone 1 determines whether or not it has arrived at a destination. When drone 1 has determined that it has arrived at the destination (YES in step S3), it quits a series of processing. When drone 1 has determined that it has not arrived at the destination (NO in step S3), it has the process return to step S2.

When drone 1 determines that abnormality has occurred (YES in step S2), it activates disconnection apparatus 11 in step S4. In step S5, drone 1 determines whether or not a prescribed time period (for example, one second) has elapsed since activation of disconnection apparatus 11.

When drone 1 determines that the prescribed time period has elapsed (YES in step S5), in step S6, it activates ejection apparatus 5. In other words, drone 1 ejects parachute 51. When drone 1 determines that the prescribed time period has not elapsed (NO in step S5), it has the process return to step S5.

In step S7, drone 1 periodically transmits the position information indicating the current position thereof to terrestrial apparatus 900. Specifically, a base station apparatus (not shown) provided around drone 1 receives the position information of drone 1, so that terrestrial control station 902 can obtain the position information.

### <D. Summary>

(1) Referring to Figs. 2 and 3, as described above, drone 1 which is the unmanned aircraft includes (a) battery 9, (b) a plurality of propulsive mechanisms 4 (4A to 4D), (c) LTE module (communication apparatus) 63 for wireless communication with terrestrial apparatus 900 (specifically, terrestrial control station 902) which is the external device, (d) GNSS receiver 61 that obtains the current position of drone 1 by receiving radio waves emitted from a plurality of positioning satellites, (e) flight controller 8 that controls flight of drone 1 and can transmit information on the current position through LTE module 63, (f) a plurality of drive apparatuses 7 (7A to 7D) each communicatively connected to flight controller 8 and driving respective different ones of the plurality of propulsive mechanisms 4, (g) distributor 12 that distributes supplied electric power to each of the plurality of drive apparatuses 7, (h) power supply module 10 that supplies electric power from battery 9 to LTE module 63, GNSS receiver 61, and flight controller 8 through power path R1 and supplies electric power to distributor 12 through power path R2, and (i) disconnection apparatus 11 that cuts off supply of electric power from power supply module 10 to distributor 12 through power path R2 when predetermined abnormality occurs in drone 1.

According to the configuration above, when predetermined abnormality occurs, power path R2 is disconnected. Therefore, supply of electric power from battery 9 through distributor 12 to all drive apparatuses 7 is cut off. Furthermore, as a result of cut-off of supply of electric power to drive apparatuses 7, drive of all propulsive mechanisms 4 is stopped. By thus disconnecting a single power path R2, all propulsive mechanisms 4 can be deactivated.

Even when power path R2 is disconnected, supply of electric power through power path R1 to LTE module 63, GNSS receiver 61, and flight controller 8 continues. Therefore, according to drone 1, the information on the current position can be transmitted to terrestrial apparatus 900 also after power path R2 is disconnected.

Drone 1 further includes ejection apparatus 5 that includes parachute 51 (Fig. 2) and ejects parachute 51 when the predetermined abnormality occurs. Therefore, even when all propulsive mechanisms 4 are deactivated by disconnection of power path R2 based on occurrence of the predetermined abnormality, crash of drone 1 can be prevented according to the configuration above.

Advantages of drone 1 will further be described below with reference to four comparative examples.

An example in which supply of electric power from the battery to the drone as a whole is stopped when the abnormality above occurs will be described as a first comparative example. In this case, at least the flight controller, the GNSS receiver, and a communication device for communication with a terrestrial facility do not operate. Therefore, in such a case, an operator on the ground is unable to obtain the latitude and the longitude of the drone. Therefore, the operator is unable to determine a position of descent of the drone. Accordingly, the operator is unable to collect the drone.

In contrast, according to drone 1 according to the present embodiment, even when the abnormality above occurs, flight controller 8, GNSS receiver 61, and LTE module 63 can keep operating, so that the operator can accurately know the position of descent of drone 1. The drone is thus readily collected.

An example in which the flight controller performs a propulsive mechanism deactivation function of the flight controller when abnormality occurs will be described as a second comparative example. In this case, when the flight controller itself fails (abnormality occurs therein), the plurality of propulsive mechanisms cannot be deactivated. Therefore, the plurality of propulsive mechanisms keep operating with the parachute having been expanded. In this case, the propulsive mechanisms may interfere with the parachute. For example, cords (lines) of the parachute may be entangled with the propellers. Therefore, the drone may crash. Even when the propulsive mechanisms do not interfere with the parachute, flight of the drone with the propulsive mechanisms continues.

In contrast, according to drone 1 according to the present embodiment, when the abnormality above occurs, the plurality of propulsive mechanisms 4 can be deactivated. Therefore, drone 1 can slowly descend with the use of parachute 51. In addition, flight of drone 1 with the use of the plurality of propulsive mechanisms 4 can be stopped.

An example in which the path for a signal sent from the flight controller to the drive apparatus for the propulsive mechanism is disconnected when abnormality occurs will be described as a third comparative example. In this case, when the drive apparatus fails (abnormality occurs therein), the propulsive mechanism cannot be deactivated.

According to drone 1 according to the present embodiment, on the other hand, even when drive apparatus 7 fails, supply of electric power to all drive apparatuses 7 is stopped as a result of disconnection of power path R2, and hence drive by all drive apparatuses 7 can be stopped. Therefore, according to drone 1, all propulsive mechanisms 4 can be deactivated.

A configuration in which a power supply circuit between the drive apparatus and the propulsive mechanism is disconnected when abnormality occurs will be described as a fourth comparative example. In this case, in order to deactivate all propulsive mechanisms, disconnection apparatuses as many as the propulsive mechanisms (that is, the drive apparatuses) are required. Unless all disconnection apparatuses operate, at least one propulsive mechanism keeps operating.

According to drone 1 according to the present embodiment, on the other hand, disconnection of a single power path R2 suffices, and hence a single disconnection apparatus 11 suffices. Therefore, according to drone 1, cost can be lower than in the fourth comparative example. A probability of failure of one disconnection apparatus 11 in the present embodiment over a certain period is compared with a probability of failure of any one of the plurality of disconnection apparatuses shown in the fourth comparative example. Then, in correspondence with a larger number of disconnection apparatuses, the latter probability can be concluded as being higher. Therefore, according to drone 1, the probability of occurrence of such a situation that any propulsive mechanism keeps operating on the occurrence of abnormality can be lower than in the fourth comparative example where a plurality of disconnection apparatuses are required.

(2) Drone 1 includes trigger apparatus 14 that activates disconnection apparatus 11 and ejection apparatus 5 when the predetermined abnormality occurs. Trigger apparatus 14 causes ejection apparatus 5 to eject parachute 51 when a prescribed condition is satisfied after it caused disconnection apparatus 11 to cut off supply of electric power to distributor 12 through power path R2.

According to such a configuration, before ejection apparatus 5 is caused to eject parachute 51, supply of electric power to all drive apparatuses 7 can be stopped. Therefore, before ejection apparatus 5 is caused to eject parachute 51, drive of all propulsive mechanisms 4 can be stopped. Therefore, according to drone 1, as compared with the configuration in which parachute 51 is expanded while propulsive mechanism 4 is driven, the probability of entanglement of parachute 51 with propulsive mechanism 4 can be lowered.

(3) Flight controller 8 transmits information on the current position of drone 1 to terrestrial apparatus 900 through LTE module 63 based on occurrence of the predetermined abnormality. According to such a configuration, when abnormality occurs in drone 1, terrestrial apparatus 900 can know the current position of drone 1.

(4) Drone 1 includes sensor 15 that detects whether or not ejection apparatus 5 has been activated. When the predetermined abnormality occurs, flight controller 8 notifies terrestrial apparatus 900 of a result of detection by sensor 15, through LTE module 63. According to such a configuration, when abnormality occurs in drone 1, terrestrial apparatus 900 can know whether or not drone 1 has expanded parachute 51.

(5) Disconnection apparatus 11 includes transistor 111A (Fig. 4) provided between power supply module 10 and distributor 12, transistor 111A allowing a flow of the current from power supply module 10 to distributor 12 through power path R2 while it is on. When the predetermined abnormality occurs, drone 1 turns off transistor 111A. According to such a configuration, supply of electric power from power supply module 10 to distributor 12 can be stopped. Therefore, drive of all propulsive mechanisms 4 can be stopped.

(6) Each propulsive mechanism 4 includes propeller 41 and motor 42 that rotates propeller 41. Each drive apparatus 7 drives motor 42.

### <E. Modification>

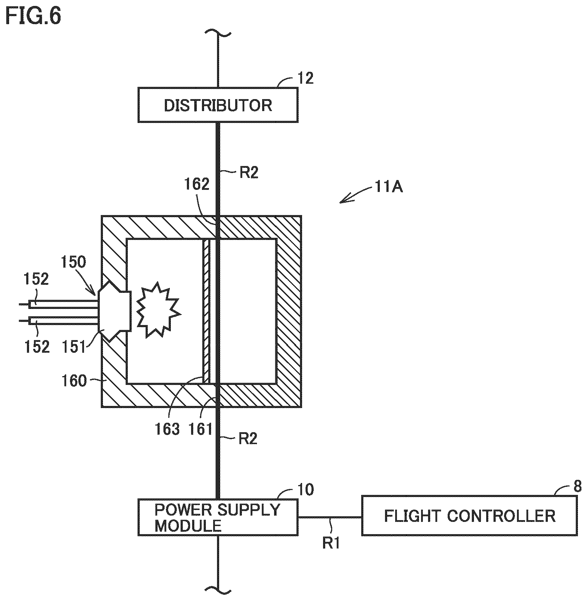

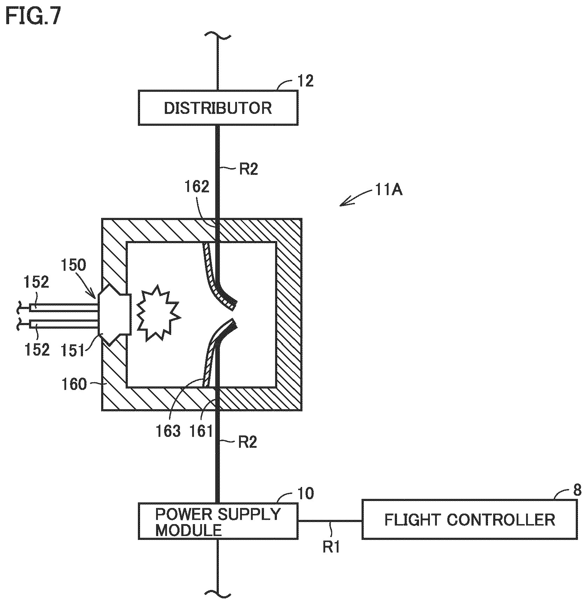

(1) A first modification of disconnection apparatus 11 will be described. Fig. 6 is a diagram showing a state before disconnection of power path R2 in the first modification of the disconnection apparatus. Fig. 7 is a diagram showing a state after disconnection of power path R2 in the first modification of the disconnection apparatus.

As shown in Fig. 6, drone 1 includes a disconnection apparatus 11A instead of disconnection apparatus 11. Disconnection apparatus 11A includes an igniter 150, a cut-off chamber 160 containing an internal space, and a rupture plate 163 that is damaged and cleaved as a result of application of heat and a pressure produced by activation of igniter 150 and disconnects power path R2. When the abnormality above occurs in drone 1, trigger apparatus 14 transmits a prescribed signal (command) to disconnection apparatus 11A so that igniter 150 is driven.

Igniter 150 ignites a flame, and includes an ignition portion 151 containing an ignition agent (not shown) that ignites a flame by being fired and burnt at the time of activation and a resistor (not shown) for ignition of the ignition agent and a pair of terminal pins 152 connected to ignition portion 151.

When abnormality of drone 1 is sensed, a prescribed amount of current flows to the resistor through the pair of terminal pins 152 upon reception of the command from trigger apparatus 14. As the current flows to the resistor, Joule heat is generated in the resistor and the ignition agent starts burning. Flames at a high temperature produced by burning rupture a squib cup (not shown) where the ignition agent is accommodated.

A through hole 161 is provided in a peripheral wall of cut-off chamber 160 and a through hole 162 is provided in another portion of the peripheral wall. Power path R2 lies like a bridge between through holes 161 and 162. Power path R2 is implemented by a bus bar. Power path R2 is formed, for example, from a metal plate or a metal wire. Power path R2 has one end connected to power supply module 10 and has the other end connected to distributor 12.

When abnormality is sensed in drone 1 and when the prescribed amount of current is supplied to the pair of terminal pins 152 of igniter 150 in response to the command from trigger apparatus 14, rupture plate 163 is damaged by heat and the pressure produced by activation of ignition portion 151 as shown in Fig. 7. In this case, rupture plate 163 is damaged in such a manner that a central portion thereof is cleaved and bent toward power path R2. Power path R2 (specifically, the bus bar) is cut off by damaged rupture plate 163.

As a result of such a process, supply of electric power from battery 9 through distributor 12 to all drive apparatuses 7 can be stopped. Therefore, drive of all propulsive mechanisms 4 can be stopped.

Instead of cutting the bus bar with rupture plate 163 as above, an actuator may cut the bus bar. For example, the bus bar may be cut by movement of a piston by a gas pressure. Alternatively, instead of such cutting, a fuse may be provided on an electric circuit and a current greater than a rated current may be fed to the fuse to blow the fuse. According to such a configuration as well, drive of all propulsive mechanisms 4 can be stopped similarly to the above.

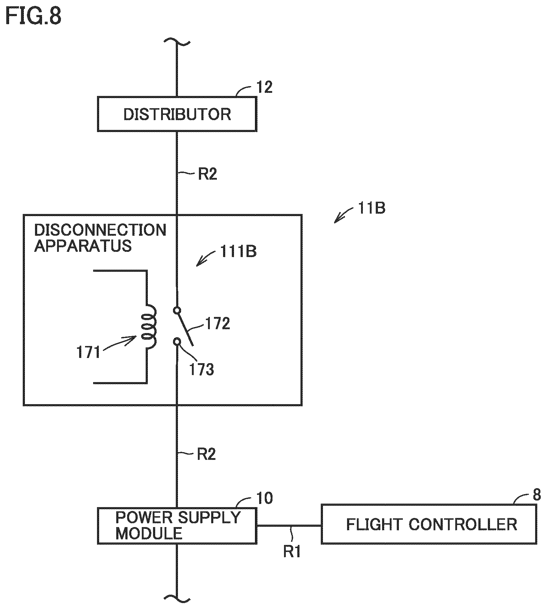

(2) Fig. 8 is a diagram for illustrating a second modification of disconnection apparatus 11. As shown in Fig. 8, drone 1 includes a disconnection apparatus 11B instead of disconnection apparatus 11. Disconnection apparatus 11B includes a relay switch 111B. Relay switch 111B includes a coil 171, a moving contact 172, and a fixed contact 173.

In relay switch 111B, a current is fed to coil 171 so that moving contact 172 comes in contact with fixed contact 173. In other words, relay switch 111B is turned on. When feed of the current to coil 171 is stopped, moving contact 172 moves away from fixed contact 173 and relay switch 111B is turned off.

While the abnormality described above is not occurring in such a configuration, the current is kept fed to coil 171. When the abnormality occurs, feed of the current to coil 171 is stopped. According to such control, an effect as in use of transistor 111A is obtained. Instead of relay switch 111B, a contactor (an electromagnetic contactor) may be employed.

(3) Battery 9 is preferably attachable and removable. When battery 9 is running low, battery 9 is removed and a completely charged battery is attached, so that drone 1 can fly without waiting for charging. Drone 1 can thus efficiently operate.

(4) Though the configuration in which communication unit 6 receives supply of electric power from battery 9 through power path R1 is described above by way of example, limitation thereto is not intended.

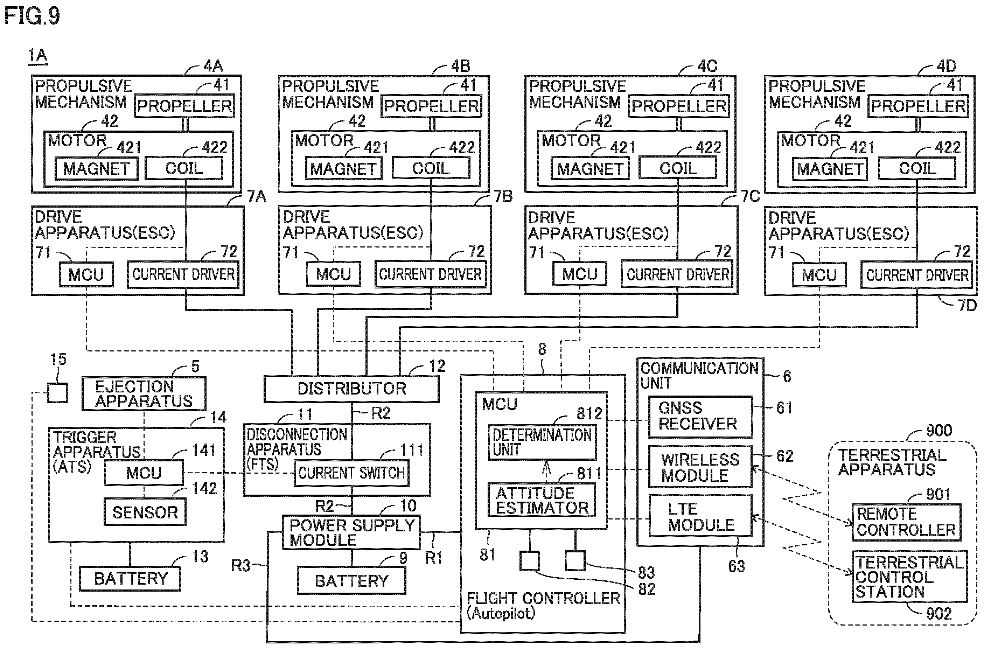

Fig. 9 is a block diagram for illustrating a hardware configuration of a drone 1A which is a modification of drone 1. As shown in Fig. 9, in the present modification, communication unit 6 receives supply of electric power by battery 9 through a power path R3 from power supply module 10, instead of reception of supply of electric power by battery 9 from flight controller 8.

Thus, in the present modification, power supply module 10 supplies electric power from battery 9 to flight controller 8 through power path R1, to distributor 12 through power path R2, and to GNSS receiver 61, wireless module 62, and LTE module 63 through power path R3. According to such a configuration as well, an effect similar to that of drone 1 is obtained by cut-off by disconnection apparatus 11, of supply of electric power from power supply module 10 to distributor 12 through power path R2 on the occurrence of predetermined abnormality.

(5) Though the configuration in which electric power is supplied from battery 9 to communication unit 6 is described above by way of example, limitation thereto is not intended. Drone 1 and drone 1A may further include another not-shown battery, and another battery may be configured to supply electric power to communication unit 6 (specifically, GNSS receiver 61, wireless module 62, and LTE module 63).

[Additional Aspect] An aerial vehicle, in which the battery includes a first battery (corresponding to battery 9) and a second battery (corresponding to another battery), power supply module 10 supplies electric power from the first battery to the flight controller through a first power path and to the distributor through a second power path and supplies electric power from the second battery to the communication apparatus and the receiver through a third power path.

The embodiments disclosed herein are illustrative and not restricted only to contents above. The scope of the present invention is defined by the terms of the claims and is intended to include any modifications within the scope and meaning equivalent to the terms of the claims.

### REFERENCE SIGNS LIST

1, 1A drone; 2 main body; 3 arm; 3A, 3B, 3C, 3D arm; 4A, 4B, 4C, 4D propulsive mechanism; 5 ejection apparatus; 6 communication unit; 7A, 7B, 7C, 7D drive apparatus; 8 flight controller; 9, 13 battery; 10 power supply module; 11, 11A, 11B disconnection apparatus; 12 distributor; 14 trigger apparatus; 15, 142 sensor; 18 support member; 41 propeller; 42 motor; 51 parachute; 61 GNSS receiver; 62 wireless module; 63 LTE module; 71, 81, 141 MCU; 72 current driver; 82 inertial measurement unit; 83 pressure altimeter; 111 current switch; 111A transistor; 111B relay switch; 150 igniter; 151 ignition portion; 152 terminal pin; 160 cut-off chamber; 161, 162 through hole; 163 rupture plate; 171, 422 coil; 172 moving contact; 173 fixed contact; 421 magnet; 811 attitude estimator; 812 determination unit; 900 terrestrial apparatus; 901 remote controller; 902 terrestrial control station; R1, R2 power path.

## Claims

1. An aerial vehicle comprising:
a battery (9);
a plurality of propulsive mechanisms (4);
a communication apparatus (6) for wireless communication with an external device;
a receiver (61) that obtains a current position of the aerial vehicle by receiving radio waves emitted from a plurality of positioning satellites;
a flight controller (8) that controls flight of the aerial vehicle;
a plurality of drive apparatuses (7) each communicatively connected to the flight controller (8), the plurality of drive apparatuses (7) driving respective different ones of the plurality of propulsive mechanisms (4);
a distributor (12) that distributes supplied electric power to each of the plurality of drive apparatuses (7);
a power supply module (10) that supplies electric power from the battery (9) to the communication apparatus (6), the receiver, and the flight controller (8) through a first power path and supplies electric power to the distributor (12) through a second power path; and
a disconnection apparatus (11) that cuts off supply of electric power from the power supply module (10) to the distributor (12) through the second power path when predetermined abnormality occurs in the aerial vehicle,
**characterized in that**
the flight controller (8) further can transmit information on the current position through the communication apparatus (6);
the disconnection apparatus (11) includes a transistor (111A) provided between the power supply module (10) and the distributor (12), the transistor (111A) allowing a flow of the current from the power supply module (10) to the distributor (12) through the second power path while the transistor (111A) is on, and
when the predetermined abnormality occurs, the disconnection apparatus (11) turns off the transistor (111A).

2. The aerial vehicle according to claim 1, further comprising an ejection apparatus (5) that includes a parachute and ejects the parachute (51) when the predetermined abnormality occurs.

3. The aerial vehicle according to claim 2, further comprising a trigger apparatus that activates the disconnection apparatus (11) and the ejection apparatus (5) when the predetermined abnormality occurs, wherein
the trigger apparatus causes the ejection apparatus (5) to eject the parachute when a prescribed condition is satisfied after the trigger apparatus causes the disconnection apparatus (11) to cut off supply of electric power to the distributor (12) through the second power path.

4. The aerial vehicle according to any one of claims 1 to 3, wherein
the flight controller (8) transmits information on the current position to the external device through the communication apparatus, based on occurrence of the predetermined abnormality.

5. The aerial vehicle according to claim 2 or 3, further comprising a sensor (15) that detects whether the ejection apparatus (5) has been activated, wherein
when the predetermined abnormality occurs, the flight controller (8) notifies the external device of a result of detection by the sensor, through the communication apparatus.

6. The aerial vehicle according to any one of claims 1 to 3, wherein
the aerial vehicle is an unmanned aircraft,
each of the propulsive mechanisms (4) includes a propeller and a motor that rotates the propeller, and
each of the drive apparatuses (7) drives the respective motor.

7. A method of controlling an aerial vehicle, the aerial vehicle supplying electric power from a contained battery (9) through a first power path, to a flight controller (8) that controls flight of the aerial vehicle, a communication apparatus (6) for wireless communication with an external device, and a receiver (61) that calculates a current position of the aerial vehicle, and supplying electric power through a second power path, to a distributor (12) that distributes electric power to each of a plurality of drive apparatuses (7), the drive apparatuses (7) driving respective different ones of a plurality of propulsive mechanisms (4) based on a command from the flight controller (8), the method comprising:
cutting off supply of electric power to the distributor (12) through the second power path when predetermined abnormality occurs in the aerial vehicle;
transmitting to the external device, information on the current position through the communication apparatus (6) when the predetermined abnormality occurs;
wherein a transistor (111A) is provided in the second power path, the transistor (111A) allowing a flow of the current to the distributor (12) while the transistor (111A) is on, and
when the predetermined abnormality occurs, turning off the transistor (111A).

## Patentansprüche

1. Luftfahrzeug, mit:
einer Batterie (9);
einer Vielzahl von Vortriebsmechanismen (4);
einer Kommunikationsvorrichtung (6) zur drahtlosen Kommunikation mit einer externen Einrichtung;
einem Empfänger (61), der eine aktuelle Position des Luftfahrzeugs durch Empfangen von Funkwellen erhält, die von einer Vielzahl von Positionierungssatelliten ausgesendet werden;
einer Flugsteuerung (8), die einen Flug des Luftfahrzeugs steuert;
einer Vielzahl von Antriebsvorrichtungen (7), die jeweils kommunikativ mit der Flugsteuerung (8) verbunden sind, wobei die Vielzahl von Antriebsvorrichtungen (7) jeweils unterschiedliche der Vielzahl von Vortriebsmechanismen (4) antreibt;
einem Verteiler (12), der zugeführte elektrische Energie an jede der Vielzahl von Antriebsvorrichtungen (7) verteilt;
einem Stromversorgungsmodul (10), das elektrische Energie von der Batterie (9) über einen ersten Strompfad an die Kommunikationsvorrichtung (6), den Empfänger und die Flugsteuerung (8) liefert und elektrische Energie über einen zweiten Strompfad an den Verteiler (12) liefert; und
einer Abtrennvorrichtung (11), die die Versorgung des Verteilers (12) mit elektrischer Energie vom Stromversorgungsmodul (10) über den zweiten Strompfad unterbricht, wenn eine vorbestimmte Abnormität im Luftfahrzeug auftritt,
**dadurch gekennzeichnet, dass**
die Flugsteuerung (8) weiterhin Informationen über die aktuelle Position über die Kommunikationsvorrichtung (6) übertragen kann;
die Abtrennvorrichtung (11) einen Transistor (111A) umfasst, der zwischen dem Stromversorgungsmodul (10) und dem Verteiler (12) bereitgestellt ist, wobei der Transistor (111A) einen Stromfluss vom Stromversorgungsmodul (10) zum Verteiler (12) über den zweiten Strompfad ermöglicht, solange der Transistor (111A) eingeschaltet ist, und
wenn die vorbestimmte Abnormität auftritt, die Abtrennvorrichtung (11) den Transistor (111A) ausschaltet.

2. Luftfahrzeug gemäß Anspruch 1, weiterhin mit einer Ausstoßvorrichtung (5), die einen Fallschirm umfasst und den Fallschirm (51) ausstößt, wenn die vorbestimmte Abnormität auftritt.

3. Luftfahrzeug gemäß Anspruch 2, weiterhin mit einer Auslösevorrichtung, die die Abtrennvorrichtung (11) und die Ausstoßvorrichtung (5) aktiviert, wenn die vorbestimmte Abnormität auftritt, wobei
die Auslösevorrichtung bewirkt, dass die Ausstoßvorrichtung (5) den Fallschirm ausstößt, wenn eine vorbestimmte Bedingung erfüllt ist, nachdem die Auslösevorrichtung bewirkt hat, dass die Abtrennvorrichtung (11) die Versorgung des Verteilers (12) mit elektrischer Energie über den zweiten Strompfad unterbricht.

4. Luftfahrzeug gemäß einem der Ansprüche 1 bis 3, wobei
die Flugsteuerung (8) basierend auf dem Auftreten der vorbestimmten Abnormität Informationen über die aktuelle Position über die Kommunikationsvorrichtung an die externe Einrichtung überträgt.

5. Luftfahrzeug gemäß Anspruch 2 oder 3, weiterhin mit einem Sensor (15), der erfasst, ob die Ausstoßvorrichtung (5) aktiviert worden ist, wobei
wenn die vorbestimmte Abnormität auftritt, die Flugsteuerung (8) die externe Einrichtung über die Kommunikationsvorrichtung über ein Erfassungsergebnis des Sensors benachrichtigt.

6. Luftfahrzeug gemäß einem der Ansprüche 1 bis 3, wobei
das Luftfahrzeug ein unbemanntes Luftfahrzeug ist,
jede der Vortriebsmechanismen (4) einen Propeller und einen Motor umfasst, der den Propeller dreht, und
jede der Antriebsvorrichtungen (7) den jeweiligen Motor antreibt.

7. Verfahren zum Steuern eines Luftfahrzeugs, wobei das Luftfahrzeug elektrische Energie aus einer darin enthaltenen Batterie (9) über einen ersten Strompfad an eine Flugsteuerung (8), die den Flug des Luftfahrzeugs steuert, eine Kommunikationsvorrichtung (6) zur drahtlosen Kommunikation mit einer externen Einrichtung und einen Empfänger (61), der eine aktuelle Position des Luftfahrzeugs berechnet, liefert und elektrische Energie über einen zweiten Strompfad an einen Verteiler (12) liefert, der elektrische Energie an jede von einer Vielzahl von Antriebsvorrichtungen (7) verteilt, wobei die Antriebsvorrichtungen (7) auf Grundlage eines Befehls von der Flugsteuerung (8) jeweils unterschiedliche einer Vielzahl von Vortriebsmechanismen (4) antreiben, wobei das Verfahren aufweist:
Unterbrechen der Versorgung des Verteilers (12) mit elektrischer Energie über den zweiten Strompfad, wenn am Luftfahrzeug eine vorbestimmte Abnormität auftritt; und
Übertragen von Informationen über die aktuelle Position an die externe Einrichtung über die Kommunikationsvorrichtung (6), wenn die vorbestimmte Abnormität auftritt;
wobei
ein Transistor (111A) im zweiten Strompfad bereitgestellt ist, wobei der Transistor (111A) einen Stromfluss zum Verteiler (12) ermöglicht, solange der Transistor (111A) eingeschaltet ist, und
wenn die vorbestimmte Abnormität auftritt, der Transistor (111A) ausgeschaltet wird.

## Revendications

1. Véhicule aérien comprenant :
une batterie (9) ;
une pluralité de mécanismes de propulsion (4) ;
un appareil de communication (6) pour la communication sans fil avec un dispositif externe ;
un récepteur (61) qui obtient une position en cours du véhicule aérien en recevant des ondes radioélectriques émises par une pluralité de satellites de positionnement ;
un contrôleur de vol (8) qui contrôle le vol du véhicule aérien ;
une pluralité d'appareils de commande (7), chacun relié de façon communicante au contrôleur de vol (8), la pluralité d'appareils de commande (7) commandant différents mécanismes respectifs de la pluralité de mécanismes de propulsion (4) ;
un distributeur (12) qui distribue de l'énergie électrique fournie à chaque appareil de la pluralité d'appareils de commande (7) ;
un module d'alimentation (10) qui alimente électriquement depuis la batterie (9) l'appareil de communication (6), le récepteur et le contrôleur de vol (8) par le biais d'un premier chemin d'alimentation, et alimente électriquement le distributeur (12) par le biais d'un deuxième chemin d'alimentation ; et
un appareil de sectionnement (11) qui coupe l'alimentation électrique depuis le module d'alimentation (10) du distributeur (12) par le biais du deuxième chemin d'alimentation lorsqu'une anomalie prédéterminée apparaît dans le véhicule aérien,
**caractérisé en ce que**
le contrôleur de vol (8) peut en outre transmettre des informations sur la position en cours par le biais de l'appareil de communication (6) ;
l'appareil de sectionnement (11) comporte un transistor (111A) disposé entre le module d'alimentation (10) et le distributeur (12), le transistor (111A) permettant une circulation du courant du module d'alimentation (10) au distributeur (12) par le biais du deuxième chemin d'alimentation pendant que le transistor (111A) est à l'état passant, et
lorsque l'anomalie prédéterminée apparaît, l'appareil de sectionnement (11) fait passer le transistor (111A) à l'état bloqué.

2. Véhicule aérien selon la revendication 1, comprenant en outre un appareil d'éjection (5) qui comporte un parachute et éjecte le parachute (51) lorsque l'anomalie prédéterminée apparaît.

3. Véhicule aérien selon la revendication 2, comprenant en outre un appareil de déclenchement qui active l'appareil de sectionnement (11) et l'appareil d'éjection (5) lorsque l'anomalie prédéterminée apparaît,
l'appareil de déclenchement provoquant l'éjection du parachute par l'appareil d'éjection (5) lorsqu'une condition prescrite est satisfaite après que l'appareil de déclenchement a amené l'appareil de sectionnement (11) à couper l'alimentation électrique du distributeur (12) par le biais du deuxième chemin d'alimentation.

4. Véhicule aérien selon l'une quelconque des revendications 1 à 3, dans lequel
le contrôleur de vol (8) transmet des informations sur la position en cours au dispositif externe par le biais de l'appareil de communication, sur la base de l'apparition de l'anomalie prédéterminée.

5. Véhicule aérien selon la revendication 2 ou 3, comprenant en outre un capteur (15) qui détecte si l'appareil d'éjection (5) a été activé, dans lequel
lorsque l'anomalie prédéterminée apparaît, le contrôleur de vol (8) signale au dispositif externe un résultat de détection du capteur, par le biais de l'appareil de communication.

6. Véhicule aérien selon l'une quelconque des revendications 1 à 3,
le véhicule aérien étant un aéronef sans pilote,
chacun des mécanismes de propulsion (4) comportant une hélice et un moteur qui fait tourner l'hélice, et
chacun des appareils de commande (7) commandant le moteur respectif.

7. Procédé de contrôle d'un véhicule aérien, le véhicule aérien alimentant électriquement depuis une batterie intégrée (9), par le biais d'un premier chemin d'alimentation, un contrôleur de vol (8) qui contrôle le vol du véhicule aérien, un appareil de communication (6) pour la communication sans fil avec un dispositif externe, et un récepteur (61) qui calcule une position en cours du véhicule aérien, et alimentant électriquement, par le biais d'un deuxième chemin d'alimentation, un distributeur (12) qui distribue de l'énergie électrique à chaque appareil d'une pluralité d'appareils de commande (7), les appareils de commande (7) commandant différents mécanismes respectifs d'une pluralité de mécanismes de propulsion (4) sur la base d'une commande provenant du contrôleur de vol (8), le procédé comprenant :
la coupure de l'alimentation électrique du distributeur (12) par le biais du deuxième chemin d'alimentation lorsqu'une anomalie prédéterminée apparaît dans le véhicule aérien ;
la transmission au dispositif externe d'informations sur la position en cours par le biais de l'appareil de communication (6) lorsque l'anomalie prédéterminée apparaît ;
un transistor (111A) étant disposé sur le deuxième chemin d'alimentation, le transistor (111A) permettant une circulation du courant jusqu'au distributeur (12) pendant que le transistor (111A) est à l'état passant, et
lorsque l'anomalie prédéterminée apparaît, le passage du transistor (111A) à l'état bloqué.
